# EUROPEAN PATENT SPECIFICATION

(11) **EP 0 558 437 B1**
(45) Date of publication and mention of the grant of the patent: **12.05.1999**
(21) Application number: 93610016.3
(22) Date of filing: 26.02.1993
(51) Int. Cl.: A01D 57/30, A01D 34/66

(54) **Mower for grass crops**
Mähmaschine für Gewächs
Faucheuse de végétaux

(30) Priority: 28.02.1992 DK 25592
(43) Date of publication of application: 01.09.1993
(60) Divisional application: 98202874.8
(73) Proprietor: JF-FABRIKEN - J. FREUDENDAHL A/S, DK-6400 Sonderborg (DK)
(72) Inventor: Freudendahl, Jan, DK-6400 Sonderborg (DK)
(74) Representative: Joergensen, Bjoern Barker

(56) References cited:
- EP-A- 332 552
- EP-A- 342 700
- EP-A- 406 961
- CA-A- 1 183 355
- DE-A- 1 782 826
- DE-A- 2 717 900
- FR-A- 2 535 154
- US-A- 2 974 469

## Description

In the harvesting of grass crops by mower, i.e. disc mowing machines, the cut crop is discharged in parallel windrows which in a subsequent operation are collected and processed by a pick-up attachment, e.g. a field chopper, designed as an exact cutter with an associated rotary collecting rake, and transferred to a collecting truck by a conveyor.

The parallel windrows have traditionally been discharged equidistantly, corresponding to the pass width of the mower, and during the following picking-up the field is run over according to the same principle as practised for the windrowing whereby one windrow at a time has been collected.

In order to increase the working capacity of the mowing operation and/or the crop collecting sequence through a reduction of the number of necessary passes, various designs of cutters and crop pick-up attachments are known.

A crop collecting attachment with increased pass width for collecting two windrows in the same operation is thus known from Applicant's DK Patent Application No. 5590/86.

EP-A-0089257 and US-A-3911649 relate to mowers by which the windrows provided by consecutive passes may be bunched, said known machines having shield devices with pivotal shield plates by means of which the crop discharge opening may be displaced transversely to the direction of travel so that its position in relation to the centre line in the direction of travel is being varied between every pass which is always effected in the same direction as regards these prior art machines.

Applicant's DK Patent Application No. 2883/87 deals with a mower in which the bunching/combining of swaths provided by the consecutive field passes is obtained by means of a shielding device with a stationary discharge opening positioned asymmetrically in relation to the pass width of the mower, consecutive field run-overs being effected in opposite directions of travel.

EP-A-0 332 552 discloses a towed mower, i.e. a mower comprising a ground wheel at each side of the mowing means and a tongue for hitching to the rear of a tractor, which mower is in its operating position placed outside the track of the tractor and may be angularly adjusted to project obliquely rearwards in relation to a position perpendicular to the direction of travel and is provided with ajusting means for placing the discharged swath immediately adjacent a previously cut swath.

Unlike said prior art designs in which the bunching of the harvested crop consists in combining the individual swaths resulting from the consecutive field passes, it is an object of the invention to provide a combination mower by which two or three windrows created by their individual mower unit are bunched at each pass, i.e. with a considerably increased mowing pass width in relation to conventional cutters.

For this purpose a combination of mowers for grass crops comprises a mower unit with provisions for front mounting on the foremost carrying arms of a tractor and at least one lift-suspended mower unit with provisions for rear mounting on the tractor, the latter unit being in its operating position positioned outside the track width of the tractor with a pass width joining the pass width of the front mounted mower unit, the rear mounted mower unit projecting obliquely rearwards in relation to a position perpendicular to the direction of travel and being provided with adjusting means for placing the discharged swath immediately adjacent the swath discharghed by the front mounted cutter.

In an embodiment of the invention a single rear mounted mower unit is provided for mounting on the rearmost carrying arms of the tractor with an adjustable inclined position in relation to the position perpendicular to the direction of travel in order to obtain a total mowing pass width composed of the pass widths of the front mounted mower unit and the rear mounted, lift-suspended unit.

The invention will now be explained in deatil with reference to the schematical drawings, in which
Fig. 1 illustrates a first embodiment of a tractor-driven mower according to the invention,
Figs 2 and 3 are details of the rear mounted unit in the mower in Fig. 1 to increase and adjust the throwing length of the discharged swath.

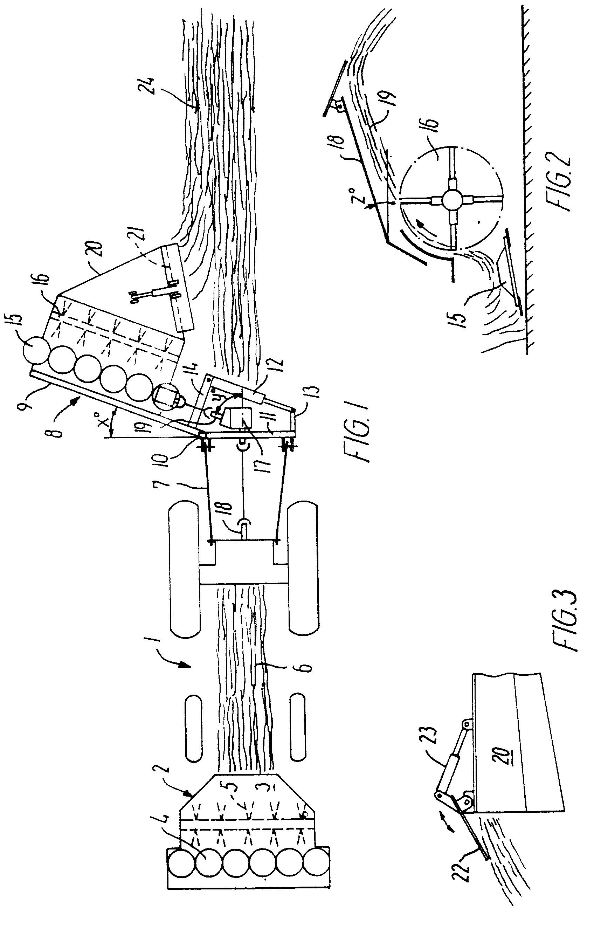

In the embodiment in Fig. 1 a mower unit 2 is suspended on the foremost carrying arms of a tractor 1, said mower unit having a discharge opening 3 through which the crop cut by the disc-shaped knives and processed by a conditioner roller 5 is discharged in a windrow 6 placed between the ground wheel of the tractor on the left and right side.

A supplementary mower unit 8 is suspended on the rearmost carrying arms 7 of the tractor, said unit in the illustrated working position being disposed outside the track width of the tractor with a pass width joining the pass width of the front mounted unit 2.

The carrier beam 9 of the mower unit 8 is through a pivot joint 10 with vertical axis connected with a transverse beam 11 suspended on the carrying arms 7 and by means of a hydraulic cylinder 12 positioned between a bracket 13 at one end of the transverse beam 11 and a cantilever 14 from the carrier beam 9 the angle X between the carrier beam 9 and a position perpendicular to the direction of travel depending on the extension of the transverse beam 11 is varied to adjust the rearwards projecting inclined position of the unit 8 in relation to the tractor.

The knives 15 and the conditioner roller 16 of unit 8 are driven by mechanical or hydraulic transmission from a transmission unit 17 mounted on the transverse beam 11 and whose drive shaft is connected on gimbals with the rearmost power take-off 18 of the tractor.

The transmission unit 17 is designed as an angle drive so that its driven shaft 19 forms an angle Y with the direction of travel, approximately equal to 90° - X.

To enhance the throwing length of the swath discharged from the conditioner roller 16 the mower unit 8 is upwards defined by an upper restriction wall 18 which, as illustrated in Fig. 2, projects obliquely upwards and rearwards at an angle Z in relation to horizontal, thereby imparting to the discharged swath a rising towards the discharge opening.

To confine the mowing pass width the discharge opening is delimited to one side by a shielding wall 20 which from the end of the conditioner roller 16 remotest from the tractor projects obliquely inwards behind the mower unit 8 so that the plane of the discharge opening 21 forms a comparatively small angle with the direction of travel.

As illustrated in Fig. 3, the discharge opening is upwardly restricted by a pivotal flap 22, the angular position of which may be adjusted by means of a hydraulic activator 23 operated from driver's seat during travelling.

By adjustment of the angle X by means of the hydraulic cylinder 12 and the pivotal flap 22 by means of the hydraulic activator 23 the swath discharged from the unit 8 may, as illustrated in Fig. 1, be placed quite adjacent to the swath 6 from the front mounted unit 2.

## Claims

1. A combination of mowers for grass crops comprising a mower unit (2; 2') with provisions for front mounting on the foremost carrying arms of a tractor (1; 1') and at least one lift-suspended mower unit (8; 33, 34) with provisions for rear mounting on the tractor (1; 1'), the latter unit being in its operating position positioned outside the track width of the tractor (1; 1') with a pass width joining the pass width of the front mounted mower unit (2, 2'), the rear mounted mower unit (8; 33, 34) projecting obliquely rearwards in relation to a position perpendicular to the direction of travel and being provided with adjusting means for placing the discharged swath (24) immediately adjacent the swath (6) discharged by the front mounted cutter.

2. A combination of mowers according to claim 1 wherein the rear mounted mower (8) is provided for connection with the rearmost carrying arms (7) of the tractor (1).

3. A combination of mowers according to claim 1 or 2, wherein said adjusting means of the rear mounted mower unit (8) includes an upper restriction wall (18) projecting obliquely upwards and rearwards to increase the throwing length of the discharghed swath.

4. A combination of mowers according to claim 3, wherein said restriction wall (18) at its rearmost edge is pivotally connected with an adjustable upper swath shield (22) for the positioning of the discharged swath (24).

5. A combination of mowers according to any of claims 1-4, wherein a single rear mounted mower unit (8) is provided for mounting on the rearmost carrying arms (7) of the tractor (1) with an adjustable, inclined position in relation to the position perpendicular to the direction of travel.

## Patentansprüche

1. Kombination von Mähmaschinen für Grasgut umfassend eine zum frontalen Montieren auf die vorderen Tragarme eines Traktors (1; 1') vorgesehene Mähmaschineneinheit (2; 2') und zumindest eine lift-aufgehängte Mähmaschineneinheit (8; 33, 34) mit Einrichtungen zum rückwärtigen Montieren auf dem Traktor, welche letztgenannte Einheit sich in der Arbeitsstellung ausserhalb der Spurweite des Traktors (1; 1) befindet und eine Arbeitsbreite anschliessend an die Arbeitsbreite der front-montierten Mähmaschineneinheit (2, 2') aufweist, wobei die rückwärts hebbar montierte Mähmaschineneinheit (8; 33, 34) im Verhältnis zu einer zur Fahrtrichtung rechtwinkeligen Stellung schräg nach hinten hervorragt und mit Einstellmitteln zum Plazieren des ausgeworfenen Schwades (24) in unmittelbarer Nähe des vom dem front-montierten Schneidwerkzeug ausgeworfenen Schwades (6) versehen ist.

2. Kombination von Mähmaschinen nach Anspruch 1, nach welchem die rückwärts montierte Mähmaschine (8) zur Verbindung mit den hinteren Tragarmen (7) des Traktors (1) vorgesehen ist.

3. Kombination von Mähmaschinen nach Anspruch 1 oder 2, nach welchem das Einstellmittel der rückwärts montierten Mähmaschineneinheit (8) eine schräg nach oben und nach hinten herausragende obere Begrenzungswand (18) zur Erhöhung der Wurflänge des ausgeworfenen Schwades umfasst.

4. Kombination von Mähmaschinen nach Anspruch 3, nach welchem die Begrenzungswand (18) an deren hinteren Kante zwecks Ablage des ausgeworfenen Schwades (24) mit einem einstellbaren oberen Schwadblech (22) schwenkbar verbunden ist.

5. Kombination von Mähmaschinen nach einem der Ansprüche 1-4, nach welchen eine einzelne rückwärts montierte Mähmaschineneinheit (8) zum Montieren auf den hinteren Tragarmen (7) des Traktors (1) in einer einstellbaren, schrägen Stellung im Verhältnis zu der in Fahrtrichtung rechtwinkeligen Stellung vorgesehen ist.

## Revendications

1. Combinaison de faucheuses de végétaux, comportant un ensemble de fauchage (2; 2') avec moyens de montage frontal sur les bras porteurs avant d'un tracteur (1; 1') et au moins un ensemble suspendu de fauchage (8; 33, 34) avec moyens de montage sur l'arrière du tracteur (1; 1'), ce dernier ensemble se trouvant, en position de travail, à l'extérieur de la voie du tracteur (1; 1'), avec une largeur de passe rejoignant la largeur de passe de l'ensemble frontal de fauchage (2; 2'), l'ensemble arrière de fauchage (8; 33, 34) s'étendant obliquement vers l'arrière par rapport à une position perpendiculaire au sens de déplacement et étant pourvu de moyens de réglage pour placer l'andain déchargé (24) en position directement adjacente à celle de l'andain (6) déchargé par l'ensemble frontal de fauchage.

2. Combinaison de faucheuses selon la revendication 1, dans laquelle l'ensemble arrière de fauchage (8) est prévu pour liaison avec les bras porteurs arrière du tracteur (1).

3. Combinaison de faucheuses selon les revendications 1 ou 2, dans laquelle lesdits moyens de réglage de l'ensemble arrière de fauchage (8) comprennent une paroi supérieure de limitation (18) s'étendant obliquement vers le haut et vers l'arrière afin d'allonger la portée d'éjection de l'andain déchargé.

4. Combinaison de faucheuses selon la revendication 3, dans laquelle ladite paroi de limitation (18) se trouve, à son bord le plus arrière, reliée à pivotement avec un écran supérieur réglable (22) d'andain pour positionnement de l'andain déchargé (24).

5. Combinaison de faucheuses selon l'une quelconque des revendications 1 à 4, dans laquelle un seul ensemble arrière de fauchage (8) est prévu pour montage sur les bras de support arrière (7) du tracteur (1) avec une position inclinée réglable par rapport à la position perpendiculaire au sens de déplacement.
